# EUROPÄISCHE PATENTSCHRIFT

(11) **EP 1 393 883 B1**
(45) Veröffentlichungstag und Bekanntmachung des Hinweises auf die Patenterteilung: **06.09.2006**
(21) Anmeldenummer: 03015099.9
(22) Anmeldetag: 03.07.2003
(51) Int. Cl.: B29C 70/44, B29C 70/54, B29L 31/30

(54) **Vorrichtung, Werkzeuganordnung und Verfahren zur Herstellung von Bauteilen aus Faserverbundwerkstoffen mittels Temperatur-und druckgesteuerter Injektionstechnik**
Device, tool system and method for the production of fiber reinforced composite parts by a temperature and pressure controlled injection process
Dispositif, système d'outillage et procédé de fabrication de pièces composites renforcées de fibres par un procédé d'injection avec contrôle de la température et de la pression

(30) Priorität: 27.08.2002 DE 10239325
(43) Veröffentlichungstag der Anmeldung: 03.03.2004
(73) Patentinhaber: MT Aerospace AG, 86153 Augsburg (DE)
(72) Erfinder: Lorenz, Torsten, 86161 Augsburg (DE); Stegmaier, Gunther, 86153 Augsburg (DE); Reiprich, Michael, 86153 Augsburg (DE); Lippert, Thomas, 81927 München (DE)
(74) Vertreter: Schwarzensteiner, Marie-Luise

(56) Entgegenhaltungen:
- EP-A- 1 038 656
- WO-A-01/68353
- WO-A-03/018297
- DE-U- 20 102 569
- US-A- 4 942 013

## Beschreibung

Die Erfindung betrifft eine Vorrichtung gemäß dem Anspruch 1, eine Werkzeuganordnung gemäß dem Anspruch 7 und ein Verfahren gemäß dem Anspruch 10 zur Herstellung von Bauteilen aus faserverstärkten Werkstoffen mittels der Matrixinjektionstechnik (Harzinjektionstechnik) .

Vorrichtungen und Verfahren zur Herstellung von Faserverbundwerkstoffen sind allgemein bekannt und beispielsweise in der WO 98/38 031, DE 100 13 409 C1, DE 201 02 569 U1, WO 03/018 297 A2, als Stand der Technik gemäß Artikel 54(3) und (4) EPÜ, sowie EP 1 136 238 A2 und dort weiter benanntem Stand der Technik offenbart. Gemeinsam ist diesen Verfahren die Aushärtung des Harzes im Vakuum.

DE 100 13 409 C1 offenbart eine Vorrichtung gemäß dem Oberbegriff des Anspruches 1.

Beim Verfahren nach der DE 100 13 409 C1 wird eine gasdurchlässige Membran genutzt, die den Verfahrensraum in zwei Räume unterteilt, nämlich in einen Injektionsraum, dem Harz zugeführt wird und einen weiteren Raum, den Lüfterraum, der an eine Vakuumpumpe angeschlossen ist. Durch Anlegen eines Vakuums, welches während der gesamten Infiltrationszeit konstant gehalten wird, wird Harz angesaugt. Die Evakuierung des Injektionsraumes erfolgt hierbei senkrecht zur Bauteiloberfläche über die gasdurchlässige Membran und den Lüfterraum. Nachteilig bei diesem Verfahren ist, dass bei komplexen Geometrien, wie sie z. B. im Flugzeugbau vorkommen (Dickensprünge im Bauteil, extrem dicke Laminate, Druckbleche an Funktionsflächen, Materialüberlappungsbereiche, Materialstöße, sehr große Bauteile etc.) neben horizontalen Fließfronten sogenannte vertikale Fließfronten entstehen können, so dass die Bauteiloberfläche zur Membran bereits vollständig mit Harz benetzt ist, aber innerhalb des Laminates Fehlstellen (Gas-/Luftblasen) unterhalb dieser Oberfläche bestehen bleiben und somit das Bauteil unbrauchbar machen können.

Das Verfahren nach dem Gebrauchsmuster DE 201 02 569 U1, das dem der EP 1 136 238 A1 entspricht, verzichtet auf die gasdurchlässige Membran im evakuierbaren Verfahrensraum, in den das Harz fließt. Dabei kommt es zu Fließfronten, die bei komplexen Bauteilen, wie sie oben definiert sind, das Verfahren nur eingeschränkt anwendbar machen. Zusätzlich wird hierbei, um ein Sieden der Harzmasse zu vermeiden, das Vakuum beeinflusst. Während der Injektionsphase wird ein möglichst kleiner Vakuumdruck im Verfahrensraum aufrechterhalten. Anschließend werden zur Aushärtung die Bauteiltemperatur und der Druck des Vakuums angehoben - das Vakuum also verschlechtert - um das erwähnte Sieden und damit Lunker in der Harzmasse zu vermeiden.

Bei beiden Verfahren wird das Bauteillaminat unter Vakuum durch den äußeren (Luft-/Gas-) Druck stark komprimiert, der innere Fließwiderstand des Laminates vergrößert und die vollständige Durchtränkung eines komplexen Bauteiles teilweise behindert.

Die Aufgabe der vorliegenden Erfindung besteht nun darin, die oben skizzierten Nachteile zu vermindern bzw. zu beseitigen und eine Vorrichtung bzw. Werkzeuganordnung sowie geeignete Verfahrensparameter anzugeben, womit die Herstellung komplexer, insbesondere großflächiger Bauteile realisiert werden kann. Hierzu zählen Bauteile, mit beispielsweise großflächig gekrümmter, oder ebener, oder nicht abwickelbarer, oder nicht vollständig abwickelbarer Geometrie.

Gegenstand der vorliegenden Erfindung ist eine Vorrichtung zur Herstellung von Kunststoffbauteilen durch Ausbilden einer Harzmatrix in Faserverbundhalbzeugen durch ein Injektionsverfahren, wobei die Vorrichtung einen Injektionsraum, der zwischen einer Form zur Aufnahme der Faserverbundhalbzeuge und einer gasdurchlässigen und harzundurchlässigen Folie ausgebildet ist, und einen Lüfterraum zwischen der Folie und einer gas- und harzundurchlässigen Folie sowie eine Harzzuleitung und Evakuierungsmittel umfasst, wobei der düfterraum mit einer Vateimleitung verbunden und sich dadurch auszeichnet, dass der Injektionsraum mit einer Vakuumleitung verbunden ist und Lüfterraum und Injektionsraum über die Vakuumleitungen getrennt und regel- und/oder steuerbar evakuierbar sind.

Mit einer solchen Vorrichtung lassen sich die Faserverbundhalbzeuge gleichmäßig mit dem Matrixmaterial infiltrieren. Fehlstellen innerhalb des Laminates in Form von Luft- oder Gasblasen sind ausgeschlossen. Eine vollständige und gleichmäßige Durchtränkung auch komplexer Bauteile wird erzielt.

Die Evakuierung kann über Vakuumleitungen erfolgen, an deren Enden sich Vakuumpumpen befinden. Insbesondere ist es möglich, die Vakuumleitungen an eine gemeinsame Absaugleitung anzuschließen, so dass nur eine Vakuumpumpe erforderlich ist.

Vorteilhafterweise ist in dem Lüfterraum ein Lüftergewebe angeordnet. Das Lüftergewebe dient insbesondere als Abstandshalter zwischen der gasdurchlässigen und harzundurchlässigen Folie und der gas- und harzundurchlässigen Folie.

In vorteilhafter Weise ist über dem Faserverbundhalbzeug wenigstens teilweise ein Verteilergewebe als Fließhilfe für das zu injizierende Harz angeordnet. Damit lässt sich die Gleichmäßigkeit der Durchtränkung der Bauteile mit Matrixmaterial steigern bzw. optimieren.

Darüber hinaus ist wenigstens eine Heizquelle vorgesehen, mit welcher die Temperatur der Vorrichtung intern und/oder extern regel- und/oder steuerbar ist. Diese Heizquelle(n) ist bzw. werden aus elektrischen Heizmatten, elektrischen Heizfolien Wärmestrahlern, insbesondere Infrarotstrahlern, Wärmeträgern und/oder Heißluft ausgewählt.

Die Vakuumleitungen sind in geeigneter Weise mit Harzfallen ausgerüstet, um zu verhindern, dass Harz in die Pumpen gelangt.

Gegenstand der vorliegenden Erfindung ist auch eine Werkzeuganordnung, welche die obige Vorrichtung in einem mit Druck beaufschlagbaren und beheizbaren Raum umfasst. Dieser mit Druck beaufschlagbare und beheizbare Raum ist vorzugsweise ein Ofen oder Autoklav.

Der Werkzeuganordnung sind wenigstens ein (beheizbarer) Vorratsbehälter für das flüssige Harz sowie Temperatur- und/oder Druckmessgeräte zugeordnet.

Als Faserhalbzeuge kommen beispielsweise Rovings, Matten, Gelege, Gewebe, Multiaxialmaterialien, Gewirke, Geflechte aus Kohlenstofffasern (CFK), Glasfasern (GFK), Aramidfasern (AFK), Borfasern (BFK) und Hybridwerkstoffe in beliebiger Kombination in Frage.

Als Matrixwerkstoffe können beispielsweise Epoxid-, Phenol-, Polyamid- oder Polyesterharzsysteme eingesetzt werden, die eine geeignete Viskosität im Arbeitstemperaturbereich aufweisen. Typische Werte liegen hier während der Injektion unter 500 mPas. Die Matrixwerkstoffe müssen auch eine bis zur Reaktion ausreichend lange Verarbeitungszeit zulassen.

Gegenstand der Erfindung ist ferner ein Verfahren zur Herstellung von Kunststoffbauteilen durch Ausbilden einer Harzmatrix in einem Faserverbundhalbzeug durch ein Injektionsverfahren unter Verwendung der vorgenannten Vorrichtung bzw. Werkzeuganordnung, umfassend eine erste Injektionsphase A bei einer Temperatur T1, einem Aussendruck D1 und einem Vakuumdruck V1, eine zweite Injektionsphase B bei einer Temperatur T2, einem Aussendruck D2 und einem Vakuumdruck V2, einer Härtungsphase C bei einer Temperatur T3, einem Aussendruck D3 und einem Vakuumdruck V3 und einer Temperphase D bei einer Temperatur T4, einem Aussendruck D4 und einem Vakuumdruck V4, wobei Parameterkombinationen gemäß den in den Tab. 3.1 bis 3.3 wiedergegebenen Verfahrenstypen eingehalten werden.

Bevorzugte Ausführungsformen ergeben sich aus den Unteransprüchen 11 bis 20.

Als Messwertgeber oder Sensoren, welche zur Überwachung der Prozessentwicklung eingesetzt werden, implantiert man insbesondere Piezoelemente, Thermoelemente und/oder Widerstandsdrähte. Vor der Injektion können ferner Bauteilkennzeichen, beispielsweise aus Metall, Kunststoff, Pappe oder Papier, auf der Oberfläche des trockenen Faserverbundhalbzeuges angeordnet werden.

Durch Anlegen des Faserverbundhalbzeuges an die Bauteilrandsimulation, entfällt ein mechanisches Nachbearbeiten des Bauteilrandes. Durch den Zusatz von Modifizierern, Bindemitteln und/oder Trägerstoffen, die sich erst während des Aushärtens der injizierten Matrix chemisch und/oder mechanisch mit dieser verbinden, lassen sich deren Eigenschaften modifizieren und verbessern.

Vorrichtung, Werkzeuganordnung und Verfahren werden nun nachfolgend anhand der Fig. 1 bis 4 sowie den Tabellen 1 bis 3 erläutert. Darin zeigt bzw. zeigen:
- Fig. 1: eine schematische Ansicht einer erfindungsgemäßen Vorrichtung;
- Fig. 2: eine schematische Ansicht einer erfindungsgemäßen Werkzeuganordnung;
- Fig. 3: erfindungsgemäße Verfahrensparameter;
- Fig. 4: den Harz-Volumenstrom und Vakuumdruck während erfindungsgemäßer Prozessphasen;
- Tab. 1: typische Werte für ein System bei Raumtemperatur;
- Tab. 2: typische Werte für ein System bei 180°C;
- Tab. 3.1 bis 3.3: zulässige Parameterkombinationen gemäß der Erfindung.

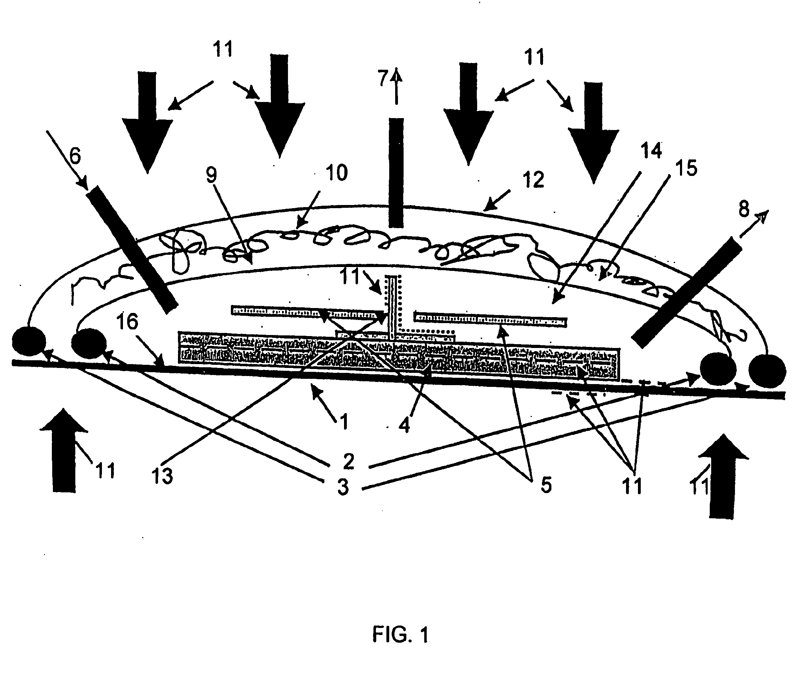

In Fig. 1 ist die typische Vorrichtung zur Herstellung für ein Bauteil schematisch wiedergegeben. Erfindungsgemäß ist die Vorrichtung 1 und damit das Faserhalbzeug 4 evakuierbar, von innen/außen steuer-/regelungstechnisch heizbar und falls erforderlich mit zusätzlichem äußeren Luft-/Gasdruck belastbar.

Die Beheizung kann beispielsweise mit elektrischen Heizfolien, Heizstrahlern, Heißluft ohne oder unter Zuhilfenahme einer Druckkammer (Autoklav, Ofen) erfolgen. Auf der Formoberfläche 16, welche die Geometrie der Außenfläche des zu erzeugenden Bauteiles aufweist und beispielsweise aus Holz, Metall, Keramik, Faserverbundkwerkstoffen oder Schaum bestehen kann, ist ein trockener Lagenaufbau eines Faserverbundhalbzeuges 4 aus beispielsweise Kohlenstofffasern (CFK), Glasfasern (GFK), Aramidfasern (AFK), Borfasern (BFK) bzw. aus Hybridwerkstoffen in der Halbzeugform Roving, Gelege, Matte, Gewirke, Gewebe, Geflecht oder als Hybrid aufgelegt. Je nach Bauteilanwendung können nicht dargestellte, weitere Hilfsmaterialien gemäß dem Stand der Technik, beispielsweise Abreißgewebe, Bronzemesh, Kupfermesh, Lochfolien, Trennfolien, Lüftergewebe etc., eingebracht sein.

Auf der der Form abgewandten Oberfläche des Bauteiles bzw. des Faserverbundhalbzeuges 4 sind ein oder mehrere sogenannte Verteilergewebe 5 aufgelegt, die nicht die gesamte Bauteiloberfläche überdecken. Vielmehr sind diese nur lokal aufgelegt. Am Bauteilrand sind die Verteilergewebe 5 nicht bis zum Rand geführt, sondern enden bereits vorher. Der typische Wert für diesen Abstand zum Bauteilrand hängt von der Bauteildicke ab und ist etwa 20 mal so groß wie diese. Auf der übrigen Bauteiloberfläche ist dieses Verteilergewebe 5 in Bahnen aufgelegt, die typischerweise eine Breite von etwa 200 mal der Bauteildicke und einen Abstand von 2 x 20 x Bauteildicke haben. Die Anzahl der Lagen dieser Verteilergewebe 5 hängt von der Bauteildicke, sowie der Bauteilgröße, der Viskosität und der Reaktionszeit des verwendeten Matrixwerkstoffes ab. Die minimale Bauteildicke ist durch die Mindestdicke einer einzigen Faserhalbzeuglage begrenzt, die maximale Bauteildicke durch die Viskosität des Harzes, dem Fließwiderstand der Faserhalbzeuge und der maximal zulässigen Verarbeitungs- bzw. Injektionszeit.

Als Werkstoffe für Verteilergewebe 5 kommen Materialien in Frage, welche sich nicht zu sehr komprimieren lassen, einen geringen Fließwiderstand für Harz aufweisen und welche die in den Fig. 5 und 6 genannten Prozesstemperaturen aushalten. Es kann sich somit um Kunststoffe, textile Halbzeuge und Metalle in Form von Geweben, Rost- und Gitterstrukturen, Geflechte oder Gewirke handeln. Jedes unterbrochene Teilstück des Verteilergewebes 5 hat eine Anbindung zu der Harzzuleitung 6, um sicherzustellen, dass das Harz aus dieser Leitung 6 auf das Veteilergewebe 5 gelangt und sich von dort aus im Verteilergewebe 5 verteilt, von wo es in das Faserhalbzeug 4 einsickert.

Mittels einer semipermeablen Folie 9 wird das Faserhalbzeug 4 abgedeckt. Die Folie ist eine gasdurchlässige, jedoch für den Matrixwerkstoff undurchlässige Folie, die den in den Fig. 5 und 6 genannten Temperaturen standhält und gegenüber den eingesetzten Werkstoffen beständig ist. Es kann ein dünnes, poröses technisches Kunststoffmaterial sein, das sich entsprechend gut drapieren lässt.

Oberhalb der gasdurchlässigen Folie 9 wird ein Lüftergewebe 10 als Abstandshalter zur gasdichten Vakuumfolie 12 aufgelegt. Dieses Lüftergewebe 10 darf sich, bedingt durch die Prozessparameter, nur in soweit komprimieren, dass während des Prozesses noch Luft durch dieses Material führbar ist. Als Werkstoffe können ähnliche Materialien wie für das Verteilergewebe 5 eingesetzt werden. Die Vakuumfolie 12 wird an der Formoberfläche 16 abgedichtet. Gleiches gilt für die Folie 9.

Die beschriebene Vorrichtung 1 weist somit zwei Räume auf, einen ersten evakuierbaren Raum als Injektionsraum 14, begrenzt durch die Dichtungen 2, die Formoberfläche 16 und die Folie 9, in dem sich das Faserhalbzeug 4 bzw. das Bauteil befindet, sowie einen zweiten evakuierbaren Raum zwischen den Folien 9 und 12 als Lüfterraum 15, begrenzt durch Dichtungen 2 und 3, die Folie 9, die Folie 12 und die Formoberfläche 16. Die Räume 14 und 15 sind über Vakuumleitungen 7 bzw. 8 separat und regelbar/steuerbar evakuierbar.

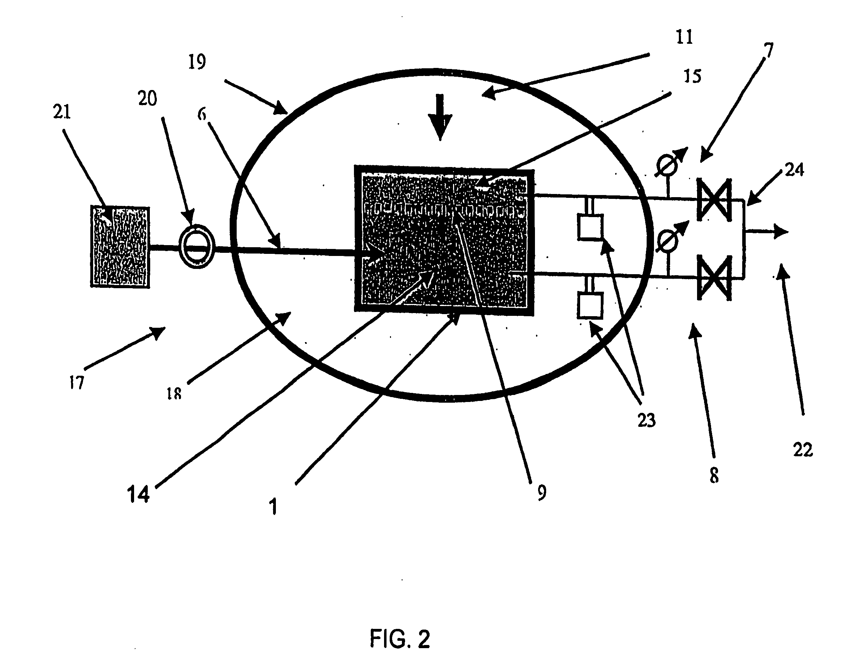

In Fig. 2 ist die erfindungsgemäße Werkzeuganordnung 17 skizziert. Hierin sind die Positionen der Leitungen 6, 7 und 8 verdeutlicht.

Die Harzzuleitung 6 ist beheizbar und verbindet den beheizbaren Harzvorratsbehälter 21 mit dem Injektionsraum 14. In die Harzzuleitung 6 sind im Allgemeinen ein Durchflussmesser, ein Absperrventil und ein Rückschlagventil integriert, welche in Fig. 2 zusammenfassend mit der Bezugsziffer 20 gekennzeichnet sind. Das Rückschlag- und das Absperrventil stellen unter anderem sicher, dass bei Folienbruch keine Luft bzw. kein Gas aus dem Druckkessel 19 unkontrolliert entweicht. Die Harzzuleitung 6 mündet am Verteilergewebe 5 so, dass das zufließende Harz sich direkt auf dem Verteilergewebe 5 ausbreiten kann. Weiterhin ist der Injektionsraum 14 über die steuerbare Vakuumleitung 8 mit einer Vakuumpumpe 22 verbunden. Diese Leitung 8 weist im Allgemeinen ein Manometer zur Überwachung des Vakuumdruckes auf, hat ein Rückschlag- und ein Absperrventil und seitlich abzweigende Stichleitungen entlang des Bauteils, so dass am Rand der Bauteiloberfläche mehrere Absaugstellen (Vakuum-Wirkstellen) wirken. Im Falle der Leitung 8 ist vor dem Manometer noch eine Harzfalle 23 installiert, da über diese Leitung 8 Harz aus dem Injektionsraum 14 abgesaugt werden kann, das das Manometer und die Vakuumpumpe beschädigen könnte. Die Anzahl der Vakuum-Wirkstellen am Bauteil durch die Vakuumleitung 8 ist abhängig von der Bauteilgeometrie, wobei beispielsweise pro 2 Streifen Verteilergewebe 5 eine Wirkstelle üblich ist. Diese Wirkstelle befindet sich am entgegengesetzten Ende der Harzzuleitung 6 und außerhalb des Bauteiles jeweils zwischen den Verteilergewebestreifen 5.

Eine zweite Vakuumleitung 7 ist an den Lüfterraum 15 angeschlossen. Sie ist ebenfalls, wie die Leitung 8, mit Instrumenten bestückt und mündet in die gemeinsame Saugleitung 24, an der die Leitung 8 zur Vakuumpumpe 22 installiert ist. Pro 1 m² bis 2 m² Bauteiloberfläche wird meist eine Wirkstelle vorgesehen, wobei diese gleichmäßig entlang des Bauteilrandes verteilt sein sollten.

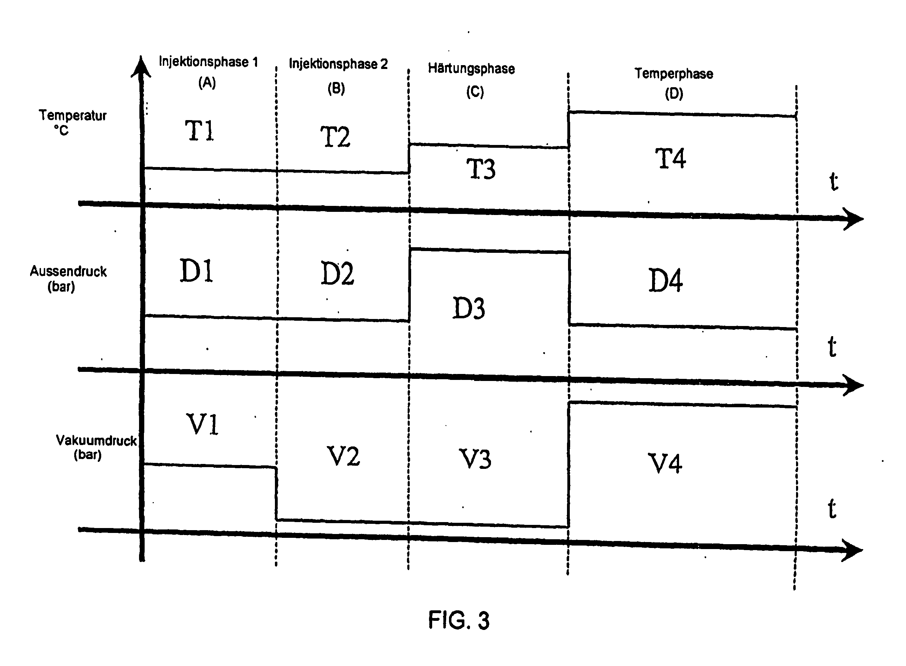

Die gesamte Vorrichtung befindet sich in einem beheizbaren und mit Druck beaufschlagbaren Raum 18, der in der Lage ist, die Temperatur Tx und den Druck Dx gemäß Fig. 3 aufzunehmen. In diesem Raum 18 (Ofen, Autoklav) sind Druck und Temperatur steuer- und regelungstechnisch einstellbar.

Vor Prozessbeginn wird die in Fig. 1 skizzierte Vorrichtung 1, wie in Fig. 2 dargestellt, in den Autoklav-/Kessel-Raum 18 eingefahren und alsdann für die vorgesehenen Leitungsverbindungen gesorgt. Mit der Funktionsprüfung sämtlicher Geräte, dem Warmfahren des Harzes, der Leitungen 6, 7 und 8 und der Vorrichtung 1 sowie der Evakuierung derselben setzt der Prozess ein und läuft über die vier Phasen A, B, C und D gemäß Fig. 3 ab:
A: Injektionsphase 1
B: Injektionsphase 2
C: Härtungsphase
D: Temperphase

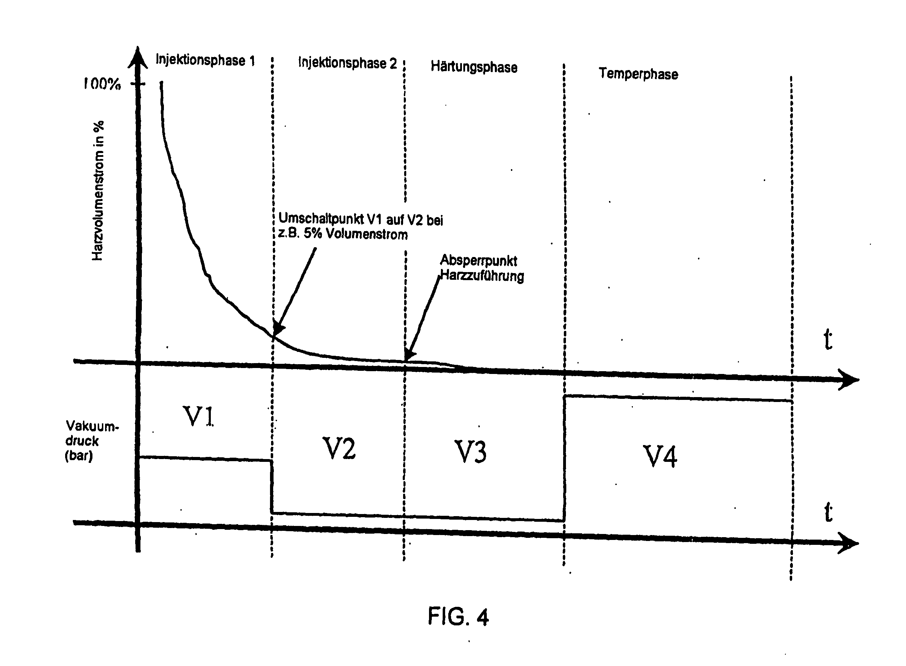

Hinsichtlich der Größe der Verfahrensparameter geben die Tab. 1 bis 3 einen Überblick. Fig. 3 zeigt somit lediglich ein Beispiel einer möglichen Parameterkombination. Beginnend mit der Injektionsphase 1 werden also über die beiden Vakuumleitungen 7 und 8 die Räume 14 und 15 evakuiert. Dazu wird beispielsweise für das in der Luftfahrt qualifizierte Harz RTM 6 ein Solldruck zwischen 100 bis 500 mbar (Fig. 3) an der Vakuumpumpe 22 bzw. am Sollwertgeber eingestellt. Der Vakuumdruck V1 wird dabei bewusst nicht zu klein gewählt, um den Fließwiderstand des vom Außendruck komprimierten Faserhalbzeugs 4 nicht übermäßig anwachsen zu lassen. Ferner wird die Vorrichtung 1 mit Verfahrensparametern gemäß Fig. 3 auf die Injektionstemperatur T1, entsprechend Phase A, von z. B. 80-90°C angehoben. Die gleiche Temperatur wird am Harzvorratsbehälter 21 und an der Harzzuleitung 6 eingestellt. Im Autoklav, respektive Kessel 19 herrscht der Druck D1 (1bar). Sobald sich ein Temperaturgleichgewicht einstellt, wird die Harzzuleitung 6 geöffnet. Aufgrund des anliegenden Vakuums in den Räumen 14 und 15 fließt das Harz in den Raum 14, trifft auf das Verteilergewebe 5, verteilt sich in diesem Gewebe an der Oberfläche des Bauteiles und sickert schließlich in das trockene Faserhalbzeug 4 ein. Am Rand des Verteilergewebes 5 wird der Fluss des Harzes an der Bauteiloberfläche gestoppt, da es in das trockene Faserhalbzeug 5 dringt und dieses durchtränkt. Begünstigt wird dies durch die bereits oben bezeichnete Anordnung der Vakuumleitung 8. Gleichzeitig wird die durch das Harz verdrängte Luft durch die gasdurchlässige Folie 9 abgesaugt. Damit ist sichergestellt, dass während der Prozesszeit ein Absaugen der überflüssigen Luft in vertikaler Richtung zur gasdurchlässigen Folie 9 über die Vakuumleitung 7 und unterhalb dieser Folie, also aus dem Injektionsraum 14, über die Vakuumleitung 8 erfolgen kann. Während der Injektionsphase 1 und 2 vermindert sich der Volumenstrom des Harzes, gemessen im Punkt 20 der Harzzuleitung 6, entsprechend Fig. 4. Der Wechsel in die Injektionsphase 2 erfolgt, wenn der Harzfluss auf typischerweise etwa 5 % des anfänglichen Harzflusses (100 %-Wert) gefallen ist (Fig. 4).

In der Injektionsphase 2 kann die Vakuumleitung 8 geschlossen werden, insbesondere wenn die Gefahr besteht, dass Harz in eine oder einige Vakuumabzweigleitungen dringen könnte. Die Temperatur T2 und der Druck D2 im Raum 18 werden eingestellt.

Diese können gleich oder größer als zuvor sein. Gleichzeitig wird der Vakuumdruck in der Leitung 7 auf üblicherweise kleiner als 10 mbar abgesenkt, indem z. B. die maximal mögliche Pumpleistung eingestellt wird. Dadurch werden im durchtränkten Faserhalbzeug 4 befindliche Gas- oder Luftblasen, bei entsprechend größerem Blasen-Innendruck, in Richtung der gasdurchlässigen Folie 9 bewegt und von dort über das Lüftergewebe 10, die Vakuumleitung 7 und die Harzfalle 23 von der Vakuumpumpe 22 abgesaugt. Zusätzlich wird das Faserhalbzeug 4 durch den Außendruck belastet, was die Bauteilqualität erhöht. Die Injektionsphase 2 wird solange fortgesetzt bis die vorherbestimmte Harzmenge einschließlich der Verluste verbraucht ist. Die erforderliche Harzmenge ergibt sich aus dem gewünschten Faservolumengehalt, der beispielsweise im Bereich zwischen 50 bis 60 % liegt und einem Schätzwert für die Verluste. Sobald dieser Punkt erreicht ist, wird bei gleichbleibendem hohem Vakuumdruck V3 (10-20 mbar) die Härtungsphase C eingeleitet.

Die Härtungsphase beginnt mit dem Schließen der Harzzufuhr, der Erhöhung der Temperatur auf T3 und der Einstellung des Druckes D3 im Kessel/Autoklav 19. Unter dem Vakuumdruck V3 wird die Harzmasse solange ausgehärtet bis die vom Harzhersteller festgelegte Aushärtezeit verstrichen ist. Danach ist die Harzmasse hart und fest. Während der Aushärtephase ist ein mögliches Sieden des Harzes, bedingt durch den Dampfdruck, nicht nur erlaubt, sondern prozessbedingt erwünscht.

Nach Abschluss der Härtungsphase wird das Bauteil getempert, sofern dies für die abschließende chemische Reaktion des Harzes erforderlich ist. Gründe hierfür können Verbesserungen der Eigenschaften der Harzmasse sein, wie z. B. eine verbesserte warmformstabilität unter Einsatzbedingungen.

In den Tab. 1 und 2 sind für alle Phasen typische Kenngrößen angegeben, die beispielhaft für typisch qualifizierte Harzsysteme sind. Sie hängen von den gewählten Werkstoffen ab.

In den Tab 3.1 bis 3.3 sind zu den Phasen alle bekannten Parameterkombinationsmöglichkeiten dargestellt.

Am Ende der Härtungs- bzw. Temperphase kann das Bauteil aus der Form entnommen und es können alle für die weitere Bearbeitung nicht mehr benötigten Hilfsstoffe, z. B. durch Abziehen entfernt werden.

Das Bauteil steht danach für weitere Behandlungen, wie Prüfung, mechanische Bearbeitung und dergleichen, zur Verfügung.

**TAB. 1**

| Typische Werte Raumtemperatur-System | |
|---|---|
| T1: Injektionstemperatur 1 | RT ¹⁾ bis ca. 40 °C |
| T2: Injektionstemperatur 2 | RT bis ca. 40 °C |
| T3: Härtungstemperatur | RT bis ca. 60 °C |
| T4: Tempertemperatur | RT bis 1.20 °C |
| D1: Außendruck während der Injektionsphase 1 | ca. 1 bar (abs) |
| D2: Außendruck während der Injektionsphase 2 | ca. 1 bar (abs) |
| D3: Außendruck während der Aushärtung | ca. 1 bis 10 bar (abs) |
| D4: Außendruck während des Temperns | ca. 1 bis 10 bar (abs) |
| V1: Vakuumdruck während der Injektionsphase 1 | ca. 100-500 mbar (abs) |
| V2: Vakuumdruck während der Injektionsphase 2 | ca. 10-20 mbar (abs) |
| V3: Vakuumdruck während der Härtung | ca. 10-20 mbar (abs) |
| V4: Vakuumdruck während des Temperns | ca. 10-1000 mbar (abs) |

| | |
|---|---|
| ¹⁾ RT = Raumtemperatur | |

**TAB. 2**

| Typische Werte 180°C-System | |
|---|---|
| T1: Injektionstemperatur 1 | ca. 70 bis ca. 100 °C |
| T2: Injektionstemperatur 2 | ca. 70 bis ca. 100 °C |
| T3: Härtungstemperatur | ca. 100 bis ca. 180 °C |
| T4: Tempertemperatur | ca. 160 bis 200 °C |
| D1: Außendruck während der Injektionsphase 1 | ca. 1 bar (abs) |
| D2: Außendruck während der Injektionsphase 2 | ca. 1 bar (abs) |
| D3: Außendruck während der Aushärtung | ca. 1 bis 10 bar (abs) |
| D4: Außendruck während des Temperns | ca. 1 bis 10 bar (abs) |
| V1: Vakuumdruck während der Injektionsphase 1 | ca.100-500 mbar (abs) |
| V2: Vakuumdruck während der Injektionsphase 2 | ca. 10-20 mbar (abs) |
| V3: Vakuumdruck während der Härtung | ca. 10-20 mbar (abs) |
| V4: Vakuumdruck während des Temperns | ca. 10-1000 mbar (abs) |

**TAB. 3.1**

| Zulässige Parameterkombinationen |
|---|
| **Verfahrenstyp 1: Basisvariante** |
| T1≤T2, T3>T2, T3<T4, D1=D2=D4=V4, D3>D1,V1>V2, V2=V3 |
| **Verfahrenstyp 2:** |
| T1=T2, T3> T2, T3<T4, D1=D2=D4=V4, D3>D1,V1>V2, V2=V3 |
| **Verfahrenstyp 3:** |
| T1=T2, T3=T2, T3<T4, D1=D2=D4=V4, D3>D1,V1>V2, V2=V3 |
| **Verfahrenstyp 4:** |
| T1=T2, T3=T2, T3=T4, D1=D2=D4=V4, D3>D1,V1>V2, V2=V3 |
| **Verfahrenstyp 5:** |
| T1<T2, T3 > T2, T3<T4, D1=D2=D3=D4=V4, V1>V2, V2=V3 |
| **Verfahrenstyp 6:** |
| T1=T2, T3>T2, T3<T4, D1=D2=D3=D4=V4, V1>V2, V2=V3 |
| **Verfahrenstyp 7:** |
| T1=T2, T3=T2, T3<T4, D1=D2=D4=V4, D3=D1, V1>V2, V2=V3 |
| **Verfahreustyp 8:** |
| T1=T2, T3=T2, T3=T4, D1=D2=D3=D4=V4, V1>V2, V2=V3 |

**TAB. 3.2**

| Zulässige Parameterkombinationen |
|---|
| **Verfahrenstyp 9:** |
| T1<T2, T3 >T2, T3<T4, D1=D2=D4=V4, D3>D1, V2=V3=V4 |
| **Verfahrenstyp 10:** |
| T1=T2, T3>T2, T3<T4, D1=D2=D4=V4, D3>D1, V2=V3=V4 |
| **Verfahrenstyp 11:** |
| T1=T2, T3=T2, T3<T4, D1=D2=D4=V4, D3>D1,V2=V3=V4 |
| **Verfahreustyp 12:** |
| T1=T2, T3=T2, T3=T4, D1=D2=D4=V4, D3>D1, V2=V3=V4 |
| **Verfahrenstyp 13:** |
| T1<T2, T3>T2, T3<T4, D1=D2=D3=D4=V4, V2=V3=V4 |
| **Verfahrenstyp 14:** |
| T1=T2, T3>T2, T3<T4, D1=D2=D3=D4=V4, V2=V3=V4 |
| **Verfahrenstyp 15:** |
| T1=T2, T3=T2, T3<T4, D1=D2=D3=D4=V4, V2=V3=V4 |
| **Verfahrenstyp 16:** |
| T1=T2, T3=T2, T3=T4, D1=D2=D3=D4=V4, V2=V3=V4 |

**TAB. 3.3**

| Zulässige Parameterkombinationen |
|---|
| **Verfahrenstyp 17:** |
| Kombination der Verfahrenstypen 1 bis 16 mit den typ, Werten nach Tab.1 |
| **Verfahrenstyp 18:** |
| Kombination der Verfahrenstypen 1 bis 16 mit den typ. Werten nach Tab. 2 |
| **Verfahrenstyp 19:** |
| Kombination der Verfahrenstypen 1-18 mit den typ. Werten nach Tab. 1 und 2 ohne Verteilergewebe |

## Patentansprüche

1. Vorrichtung (1) zur Herstellung von Kunststoffbauteilen durch Ausbilden einer Harzmatrix in Faserverbundhalbzeugen (4) durch ein Injektionsverfahren, wobei die Vorrichtung (1) einen Injektionsraum (14), der zwischen einer Form (16) zur Aufnahme der Faserverbundhalbzeuge (4) und einer gasdurchlässigen und harzundurchlässigen Folie (9) ausgebildet ist, und einen Lüfterraum (15) zwischen der Folie (9) und einer gas- und harzundurchlässigen Folie (12) sowie eine Harzzuleitung (6) und Evakuierungsmittel (7, 8) umfasst, wobei der Lüfterraum (15) mit einer Vakuumleitung (7) verbunden ist, **dadurch gekennzeichnet, dass** der Injektionsraum (14) mit einer Vakuumleitung (8) verbunden ist und Lüfterraum (15) und Injektionsraum (14) über die Vakuumleitungen (7, 8) getrennt regel- oder steuerbar evakuierbar sind.

2. Vorrichtung nach Anspruch 1, **dadurch gekennzeichnet, dass** in dem Lüfterraum (15) ein Lüftergewebe (10) angeordnet ist.

3. Vorrichtung nach Anspruch 1 oder 2, **dadurch gekennzeichnet, dass** über dem Faserverbundhalbzeug (4) wenigstens teilweise ein Verteilergewebe (5) als Fließhilfe für das zu infiltrierende Harz angeordnet ist.

4. Vorrichtung nach den Ansprüchen 1 bis 3, **dadurch gekennzeichnet, dass** wenigstens eine Heizquelle (11) vorgesehen ist, mit welcher die Temperatur der Vorrichtung intern und/oder extern regel- und/oder steuerbar ist.

5. Vorrichtung nach Anspruch 4, **dadurch gekennzeichnet, dass** die Heizquelle(n) (11) aus elektrischen Heizmatten, elektrischen Heizfolien, Wärmestrahlern, Wärmeträgern und/oder Heißluft ausgewählt ist/sind.

6. Vorrichtung nach einem der Ansprüche 1 bis 5, **dadurch gekennzeichnet, dass** die Vakuumleitungen (7) und(8) mit Harzfallen (23) ausgerüstet sind.

7. Werkzeuganordnung umfassend die Vorrichtung (1) nach einem der Ansprüche 1 bis 6, angeordnet in einem mit Druck beaufschlagbaren und beheizbaren Raum (18).

8. Werkzeuganordnung nach Anspruch 7, **dadurch gekennzeichnet, dass** der mit Druck beaufschlagbare und beheizbare Raum (18) ein Ofen oder Autoklav (19) ist.

9. Werkzeuganordnung nach Anspruch 7 oder 8, **dadurch gekennzeichnet, dass** ihr wenigstens ein (beheizbarer) Vorratsbehälter (21) für das flüssige Harz sowie Temperatur- und/oder Druckmessgeräte zugeordnet sind.

10. Verfahren zur Herstellung von Kunststoffbauteilen durch Ausbilden einer Harzmatrix in einem Faserverbundhalbzeug durch ein Injektionsverfahren unter Verwendung der Werkzeuganordnung nach einem der Ansprüche 7 bis 9 oder der Vorrichtung nach einem der Ansprüche 1 bis 6, umfassend eine erste Injektionsphase A bei einer Temperatur T1, einem Aussendruck D1 und einem Vakuumdruck V1, eine zweite Injektionsphase B bei einer Temperatur T2, einem Aussendruck D2 und einem Vakuumdruck V2, eine Härtungsphase C bei einer Temperatur T3, einem Aussendruck D3 und einem Vakuumdruck V3 und eine Temperphase D bei einer Temperatur T4, einem Aussendruck D4 und einem Volumendruck V4, wobei Parameterkombinationen gemäß den in den Verfahrenstypen eingehalten werden:
**Verfahrenstyp 1: Basisvariante**
T1≤T2, T3>T2, T3<T4, D1=D2=D4=V4, D3>D1, V1>V2, V2=V3
**Verfahrenstyp 2:**
T1=T2, T3>T2, T3<T4, D1=D2=D4=V4, D3>D1, V1>V2, V2=V3
**Verfahrenstyp 3:**
T1=T2, T3=T2, T3<T4, D1=D2=D4=V4, D3>D1, V1>V2, V2=V3
**Verfahrenstyp 4:**
T1=T2, T3=T2, T3=T4, D1=D2=D4=V4, D3>D1, V1>V2, V2=V3
**Verfahrenstyp 5:**
T1<T2, T3>T2, T3<T4, D1=D2=D3=D4=V4, V1>V2, V2=V3
**Verfahrenstyp 6:**
T1=T2, T3>T2, T3<T4, D1=D2=D3=D4=V4, V1>V2, V2=V3
**Verfahrenstyp 7:**
T1=T2, T3=T2, T3<T4, D1=D2 =D4=V4, D3=D1, V1>V2, V2=V3
**Verfahrenstyp 8:**
T1=T2, T3=T2, T3=T4, D1=D2=D3=D4=V4, V1>V2, V2=V3
**Verfahrenstyp 9:**
T1<T2, T3>T2, T3<T4, D1=D2=D4=V4, D3>D1, V2=V3=V4
**Verfahrenstyp 10:**
T1=T2, T3>T2, T3<T4, D1=D2=D4=V4, D3>D1,V2=V3=V4
**Verfahrenstyp 11:**
T1=T2, T3=T2, T3<T4, D1=D2=D4=V4, D3>D1,V2=V3=V4
**Verfahrenstyp 12:**
T1=T2, T3=T2, T3=T4, D1=D2=D4=V4, D3>D1,V2=V3=V4
**Verfahrenstyp 13:**
T1<T2, T3>T2, T3<T4, D1=D2=D3=D4=V4, V2=V3=V4
**Verfahrenstyp 14:**
T1=T2, T3>T2, T3<T4, D1=D2=D3=D4=V4, V2=V3=V4
**Verfahrenstyp 15:**
T1=T2, T3=T2, T3<T4, D1=D2=D3=D4=V4, V2=V3=V4
**Verfahrenstyp 16:**
T1=T2, T3=T2, T3=T4, D1=D2=D3=D4=V4, V2=V3=V4
**Verfahrenstyp 17:**
Kombination der Verfahrenstypen 1 bis 16 mit den typ. Werten
| | |
|---|---|
| T1: | RT¹⁾ bis ca. 40 °C |
| T2: | RT bis ca. 40 °C |
| T3: | RT bis ca. 60 °C |
| | |
|---|---|
| T4: | RT bis 120 °C |
| D1: | ca. 1 bar (abs) |
| D2: | ca. 1 bar (abs) |
| D3: | ca. 1 bis 10 bar (abs) |
| D4: | ca. 1 bis 10 bar (abs) |
| V1: | ca. 100-500 mbar (abs) |
| V2: | ca. 10-20 mbar (abs) |
| V3: | ca. 10-20 mbar (abs) |
| V4: | ca. 10-1000 mbar (abs) |
**Verfahrenstyp 18:**
Kombination der Verfahrenstypen 1 bis 16 mit den typ. Werten
| | |
|---|---|
| T1: | ca. 70 bis ca. 100 °C |
| T2: | ca. 70 bis ca. 100 °C |
| T3: | ca. 100 bis ca. 180 °C |
| T4: | ca. 160 bis 200 °C |
| D1: | ca. 1 bar (abs) |
| D2: | ca. 1 bar (abs) |
| D3: | ca. 1 bis 10 bar (abs) |
| D4: | ca. 1 bis 10 bar (abs) |
| V1: | ca. 100-500 mbar (abs) |
| V2: | ca. 10-20 mbar (abs) |
| V3: | ca. 10-20 mbar (abs) |
| V4: | ca. 10-1000 mbar (abs) |
**Verfahrenstyp 19:**
Kombination der Verfahrenstypen 1-18 mit den typ. Werten nach den Verfahrenstypen 17 und 18 ohne Verteilergewebe.

11. Verfahren nach Anspruch 10, **dadurch gekennzeichnet, dass** in das trockene Faserverbundhalbzeug (4) vor Prozessbeginn Sensoren zur Wiedergabe von Messwerten implantiert werden.

12. Verfahren nach Anspruch 10 oder 11, **dadurch gekennzeichnet, dass** zur Überwachung des chemischen Aushärtungszustandes Harzreste aus der Harzzuleitung (6) verwendet werden.

13. Verfahren nach einem der Ansprüche 10 bis 12, **dadurch gekennzeichnet, dass** zur Herstellung von zusammengesetzten Bauteilen nach Aushärtung eines ersten Bauteiles ein weiteres Bauteil mittels der Injektionstechnik angefügt und ausgehärtet wird.

14. Verfahren nach einem der Ansprüche 10 bis 13, **dadurch gekennzeichnet, dass** der Bauteilrand durch Anlegen des Faserhalbzeuges an eine Bauteil-Randsimulation (Negativform) im trockenen Zustand maßgenau ausgebildet, injiziert und ausgehärtet wird.

15. Verfahren nach einem der Ansprüche 10 bis 14, **dadurch gekennzeichnet, dass** als Faserhalbzeug einheitliches Material oder eine Mischung unterschiedlicher Materialien verwendet wird.

16. Verfahren nach Anspruch 15, **dadurch gekennzeichnet, dass** das oder die Material(ien) aus Kohlenstofffasern, Glasfasern, Borfasern ausgewählt wird.

17. Verfahren nach einem der Ansprüche 10 bis 16, **dadurch gekennzeichnet, dass** das Matrixmaterial aus der Gruppe ausgewählt wird, die aus Epoxidharz, Thermoplasten, Phenolharz, Polyamiden, Bismalamiden besteht.

18. Verfahren nach einem der Ansprüche 10 bis 17, **dadurch gekennzeichnet, dass** neben dem Faserhalbzeug ein lokales Prepreg angeordnet wird und Faserhalbzeug und Prepreg simultan mit Harz infiltriert werden.

19. Verfahren nach Anspruch 18, **dadurch gekennzeichnet, dass** das Faserhalbzeug und/oder die Matrix des Prepregs des Weiteren Modifizierer, Bindemittel und/oder Träger umfasst.

20. Verfahren nach einem der Ansprüche 10 bis 19, **dadurch gekennzeichnet, dass** die Faserhalbzeuge mittels thermischer Kleber, Bindemittel, Granulate und/oder Harzpulver fixiert werden.

## Claims

1. Device (1) for the manufacture of plastic components by forming a resin matrix in fiber-composite blanks (4) by an injection method, with the device (1) having an injection space (14) that is formed between a mold (16) to take the fiber-composite blank (4) and a gas-permeable and resin-impermeable membrane (9), and an airflow space (15) between the membrane (9) and a gas-impervious and resin-impervious membrane (12), and also a resin supply line (6) and evacuating means (7, 8), with the airflow space (15) being connected with a vacuum line (7), **characterized in that** the injection space (14) is connected to a vacuum line (8) and the airflow space (15) and injection space (14) can be separately evacuated under close-circuit or open-circuit control through the vacuum lines (7, 8).

2. Device in accordance with claim 1, **characterized in that** an airflow fabric (10) is arranged in the airflow space (15).

3. Device in accordance with claim 1 or 2, **characterized in that**, at least partially, a distribution fabric (5) as a flow aid for the resin to be infiltrated is arranged over the fiber-composite blank (4).

4. Device in accordance with claims 1 to 3, **characterized in that** at least one heat source (11) is provided, by means of which the temperature of the device can be internally and/or externally controlled using closed-circuit or open-circuit control.

5. Device in accordance with claim 4, **characterized in that** the heat source(s) (11) is/are selected from electrical heating mats, electrical heating membranes, heat radiators, heat carriers and/or hot air.

6. Device in accordance with one of claims 1 to 5, **characterized in that** the vacuum lines (7) and (8) are fitted with resin traps (23).

7. Tool arrangement including the device (1) in accordance with one of claims 1 to 6, arranged in a space (18) that can be pressurized and heated.

8. Tool arrangement in accordance with claim 7, **characterized in that** the space (18) that can be pressurized and heated is an oven or autoclave (19).

9. Tool arrangement in accordance with claim 7 or 8, **characterized in that** at least one (heatable) supply container (21) for liquid resin as well as temperature and/or pressure measuring devices are allocated to it.

10. Method for manufacturing plastic components by forming a resin matrix in a fiber-composite blank by an injection method using the tool arrangement in accordance with one of claims 7 to 9 or the device in accordance with one of claims 1 to 6, including a first injection phase A at a temperature T1, an external pressure D1 and a vacuum pressure V1, a second injection phase B at a temperature T2, an external pressure D2 and a vacuum pressure V2, a curing phase C at a temperature T3, an external pressure D3 and a vacuum pressure V3 and an annealing phase D at a temperature T4, an external pressure D4 and a volume pressure V4 with parameter combinations in accordance with the type of method being maintained:
**Method type 1: basic variant**
T1≤T2, T3>T2, T3<T4, D1=D2=D4=V4, D3>D1, V1>V2, V2=V3
**Method type 2:**
T1=T2, T3>T2, T3<T4, D1=D2=D4=V4, D3>D1, V1>V2, V2=V3
**Method type 3:**
T1=T2, T3=T2, T3<T4, D1=D2=D4=V4, D3>D1, V1>V2, V2=V3
**Method type 4:**
T1=T2, T3=T2, T3=T4, D1=D2=D4=V4, D3>D1, V1>V2, V2=V3
**Method type 5:**
T1<T2, T3>T2, T3<T4, D1=D2=D3=D4=V4, V1>V2, V2=V3
**Method type 6:**
T1=T2, T3>T2, T3<T4, D1=D2=D3=D4=V4, V1>V2, V2=V3
**Method type 7:**
T1=T2, T3=T2, T3<T4, D1=D2=D4=V4, D3=D1, V1>V2, V2=V3
**Method type 8:**
T1=T2, T3=T2, T3=T4, D1=D2=D3=D4=V4, V1>V2, V2=V3
**Method type 9:**
T1<T2, T3>T2, T3<T4, D1=D2=D4=V4, D3>D1, V2=V3=V4
**Method type 10:**
T1=T2, T3>T2, T3<T4, D1=D2=D4=V4, D3>D1, V2=V3=V4
**Method type 11:**
T1=T2, T3=T2, T3<T4, D1=D2=D4=V4, D3>D1, V2=V3=V4
**Method type 12:**
T1=T2, T3=T2, T3=T4, D1=D2=D4=V4, D3>D1, V2=V3=V4
**Method type 13:**
T1<T2, T3>T2, T3<T4, D1=D2=D3=D4=V4, V2=V3=V4
**Method type 14:**
T1=T2, T3>T2, T3<T4, D1=D2=D3=D4=V4, V2=V3=V4
**Method type 15:**
T1=T2, T3=T2, T3<T4, D1=D2=D3=D4=V4, V2=V3=V4
**Method type 16:**
T1=T2, T3=T2, T3=T4, D1=D2=D3=D4=V4, V2=V3=V4
**Method type 17:**
**Combination of method types 1 to 16 with typical values**
| | |
|---|---|
| T1: | RT¹⁾ up to approx. 40 °C |
| T2: | RT up to approx. 40 °C |
| T3: | RT up to approx. 60 °C |
| T4: | RT up to 120 °C |
| D1: | approx. 1 bar (abs) |
| D2: | approx. 1 bar (abs) |
| D3: | approx. 1 to 10 bar (abs) |
| D4: | approx. 1 to 10 bar (abs) |
| V1: | approx. 100-500 mbar (abs) |
| V2: | approx. 10-20 mbar (abs) |
| V3: | approx. 10-20 mbar (abs) |
| V4: | approx. 10-1000 mbar (abs) |
| ¹⁾ = Room temperature | |
**Method type 18:**
**Combination of method types 1 to 16 with typical values**
| | |
|---|---|
| T1: | approx. 70 to approx. 100 °C |
| T2: | approx. 70 to approx. 100 °C |
| T3: | approx. 100 to approx. 180 °C |
| T4: | approx. 160 to 200 °C |
| D1: | approx. 1 bar (abs) |
| D2: | approx. 1 bar (abs) |
| D3: | approx. 1 to 10 bar (abs) |
| D4: | approx. 1 to 10 bar (abs) |
| V1: | approx. 100-500 mbar (abs) |
| V2: | approx. 10-20 mbar (abs) |
| V3: | approx. 10-20 mbar (abs) |
| V4: | approx. 10-1000 mbar (abs) |
**Method type 19:**
Combination of method types 1 to 18 with typical values in accordance with method types 17 and 18 without a distribution fabric.

11. Method in accordance with claim 10, **characterized in that** sensors are implanted in the dry fiber-composite blank (4) before the start of the process to sense the measured values.

12. Method in accordance with claim 10 or 11, **characterized in that** resin residue from the resin supply line (6) is used to monitor the chemical curing state.

13. Method in accordance with one of claims 10 to 12, **characterized in that**, to produce assembled components after curing a first component, a further component is added using the injection technique and cured.

14. Method in accordance with one of claims 10 to 13, **characterized in that** the component edge is formed to precise dimensions, injected and cured in the dry condition by applying the fiber-composite blank to a component edge simulation (negative mode).

15. Method in accordance with one of claims 10 to 14, **characterized in that** a uniform material or a mixture of different materials is used as the fiber blank.

16. Method in accordance with claim 15, **characterized in that** the material(s) chosen is/are made of carbon fibers, glass fibers, boron fibers.

17. Method in accordance with one of claims 10 to 16, **characterized in that** the matrix material is chosen from the group consisting of epoxide resin, thermoplastics, phenol resin, polyamides, bismalamides.

18. Method in accordance with one of claims 10 to 17, **characterized in that** a local Prepreg is arranged next to the fiber blank and that the fiber blank and the Prepreg are simultaneously infiltrated with resin.

19. Method in accordance with claim 18, **characterized in that** the fiber blank and/or matrix of the Prepreg also includes modifiers, binding agents and/or carriers.

20. Method in accordance with one of claims 10 to 19, **characterized in that** the fiber blanks are fixed using thermal adhesive, binding agents, granulate and/or resin powder.

## Revendications

1. Dispositif (1) pour la fabrication de pièces en matière plastique par la réalisation d'une matrice en résine dans des semi-produits composites à fibres (4) par un procédé d'injection, le dispositif (1) comportant une chambre d'injection (14), qui est formée entre un moule (16) destiné à recevoir les semi-produits composites à fibres (4), et une feuille (9) perméable au gaz et imperméable à la résine, et une chambre de ventilation (15) entre la feuille (9) et une feuille (12) imperméable au gaz et à la résine, ainsi qu'une conduite d'admission de la résine (6) et des moyens de production du vide (7, 8), la chambre de ventilation (15) étant reliée à une conduite sous vide (7), **caractérisé en ce que** la chambre d'injection (14) est reliée à une conduite sous vide (8) et le vide peut être généré de manière réglée ou commandée via les conduites sous vide (7, 8) séparément dans la chambre de ventilation (15) et dans la chambre d'injection (14).

2. Dispositif selon la revendication 1, **caractérisé en ce qu'**un tissu de ventilation (10) est disposé dans la chambre de ventilation (15).

3. Dispositif selon la revendication 1 ou 2, **caractérisé en ce qu'**un tissu de répartition (5), formant un auxiliaire d'écoulement pour la résine à infiltrer, est disposé au moins en partie au-dessus du semi-produit composite à fibres (4).

4. Dispositif selon l'une quelconque des revendications 1 à 3, **caractérisé en ce qu'**il est prévu au moins une source de chaleur (11), par laquelle la température du dispositif peut être régulée et/ou commandée de l'intérieur et/ou de l'extérieur.

5. Dispositif selon la revendication 4, **caractérisé en ce que** la/les source(s) de chaleur (11) choisie(s) sont des nappes de chauffage électriques, des feuilles de chauffage électriques, des corps thermorayonnants, des caloporteurs et/ou de l'air chaud.

6. Dispositif selon l'une quelconque des revendications 1 à 5, **caractérisé en ce que** les conduites sous vide (7 et 8) sont munies de pièges à résine (23).

7. Système d'outillage comportant le dispositif (1) selon l'une quelconque des revendications 1 à 6, disposé dans une enceinte (18) pouvant être sollicitée en pression et chauffée.

8. Système d'outillage selon la revendication 7, **caractérisé en ce que** l'enceinte (18) pouvant être soumise à une pression et chauffée est un four ou un autoclave (19).

9. Système d'outillage selon la revendication 7 ou 8, **caractérisé en ce qu'**il est associé à au moins un réservoir (21) contenant la résine liquide et pouvant être chauffé, ainsi qu'à des instruments de mesure de la température et/ou de la pression.

10. Procédé pour la fabrication de pièces en matière plastique par la réalisation d'une matrice en résine dans un semi-produit composite à fibres par un procédé d'injection moyennant l'utilisation du système d'outillage selon l'une des revendications 7 à 9 ou le dispositif selon l'une des revendications 1 à 6, comportant une première phase d'injection A avec une température T1, une pression extérieure D1 et une pression de vide V1, une deuxième phase d'injection B avec une température T2, une pression extérieure D2 et une pression de vide V2, une phase de durcissement C avec une température T3, une pression extérieure D3 et une pression de vide V3 et une phase d'étuvage D avec une température T4, une pression extérieure D4 et une pression de vide V4, les combinaisons de paramètres étant respectées en fonction des types de procédé :
procédé de type 1 : variante de base
T1≤T2, T3>T2, T3<T4, D1=D2=D4=V4, D3>D1, V1>V2, V2=V3
procédé de type 2 :
T1=T2, T3>T2, T3<T4, D1=D2=D4=V4, D3>D1, V1>V2, V2=V3
procédé de type 3 :
T1=T2, T3=T2, T3<T4, D1=D2=D4=V4, D3>D1, V1>V2, V2=V3
procédé de type 4 :
T1=T2, T3=T2, T3=T4, D1=D2=D4=V4, D3>D1, V1>V2, V2=V3
procédé de type 5 :
T1<T2, T3>T2, T3<T4, D1=D2=D3=D4=V4, V1>V2, V2=V3
procédé de type 6 :
T1=T2, T3>T2, T3<T4, D1=D2=D3=D4=V4, V1>V2, V2=V3
procédé de type 7 :
T1=T2, T3=T2, T3<T4, D1=D2=D4=V4, D3=D1, V1>V2, V2=V3
procédé de type 8 :
T1=T2, T3=T2, T3=T4, D1=D2=D3=D4=V4, V1>V2, V2=V3
procédé de type 9:
T1<T2, T3>T2, T3<T4, D1=D2=D4=V4, D3>D1, V2=V3=V4
procédé de type 10 :
T1=T2, T3>T2, T3<T4, D1=D2=D4=V4, D3>D1, V2=V3=V4
procédé de type 11 :
T1=T2, T3=T2, T3<T4, D1=D2=D4=V4, D3>D1, V2=V3=V4
procédé de type 12 :
T1=T2, T3=T2, T3=T4, D1=D2=D4=V4, D3>D1, V2=V3=V4
procédé de type 13 :
T1<T2, T3>T2, T3<T4, D1=D2=D3=D4=V4, V2=V3=V4
procédé de type 14 :
T1=T2, T3>T2, T3<T4, D1=D2=D3=D4=V4, V2=V3=V4
procédé de type 15 :
T1=T2, T3=T2, T3<T4, D1=D2=D3=D4=V4, V2=V3=V4
procédé de type 16 :
T1=T2, T3=T2, T3=T4, D1=D2=D3=D4=V4, V2=V3=V4
Procédé de type 17 :
**Combinaison des procédés de type 1 à 16 avec les valeurs typiqu suivantes :**
| | |
|---|---|
| T1 : | TA (température ambiante) jusqu'à environ 40°C |
| T2 : | TA jusqu'à environ 40°C |
| T3 : | TA jusqu'à environ 60°C |
| T4 : | TA jusqu'à 120°C |
| D1 : | environ 1 bar (abs) |
| D2 : | environ 1 bar (abs) |
| D3 : | environ 1 à 10 bar (abs) |
| D4 : | environ 1 à 10 bar (abs) |
| V1 : | environ 100 à 500 mbar (abs) |
| V2 : | environ 10 à 20 mbar (abs) |
| V3 : | environ 10 à 20 mbar (abs) |
| V4 : | environ 10 à 1000 mbar (abs) |
Procédé de type 18 :
**Combinaison des procédés de type 1 à 16 avec les valeurs typiqu suivantes :**
| | |
|---|---|
| T1 : | environ 70 à environ 100°C |
| T2 : | environ 70 à environ 100°C |
| | |
|---|---|
| T3 : | environ 100 à environ 180°C |
| T4 : | environ 160 à 200°C |
| D1 : | environ 1 bar (abs) |
| D2 : | environ 1 bar (abs) |
| D3 : | environ 1 à 10 bar (abs) |
| D4 : | environ 1 à 10 bar (abs) |
| V1 : | environ 100 à 500 mbar (abs) |
| V2 : | environ 10 à 20 mbar (abs) |
| V3 : | environ 10 à 20 mbar (abs) |
| V4 : | environ 10 à 1000 mbar (abs) |
Procédé de type 19 :
Combinaison des procédés de type 1 à 18 avec les valeurs typiques selon les procédés de type 17 et 18 sans tissu de répartition.

11. Procédé selon la revendication 10, **caractérisé en ce que** des capteurs destinés à éditer les valeurs de mesure ont été implantés dans le semi-produit composite à fibres (4) sec avant le début du processus.

12. Procédé selon la revendication 10 ou 11, **caractérisé en ce que** des restes de résine provenant de la conduite d'admission de la résine (6) sont utilisés pour contrôler l'état de durcissement chimique.

13. Procédé selon l'une quelconque des revendications 10 à 12, **caractérisé en ce que**, pour la réalisation de pièces assemblées, après le durcissement d'une première pièce, une autre pièce a été jointe au moyen de la technique d'injection et a été durcie.

14. Procédé selon l'une quelconque des revendications 10 à 13, **caractérisé en ce que** le bord de la pièce, moyennant l'application du semi-produit composite à fibres sur une simulation du bord de la pièce (forme négative) à l'état sec, est réalisé, injecté et durci exactement selon les dimensions.

15. Procédé selon l'une quelconque des revendications 10 à 14, **caractérisé en ce que** pour le semi-produit à fibres on utilise un matériau homogène ou un mélange de différents matériaux.

16. Procédé selon la revendication 15, **caractérisé en ce que** le matériau ou les matériaux choisi(s) sont des fibres de carbone, des fibres de verre, des fibres de bore.

17. Procédé selon l'une quelconque des revendications 10 à 16, **caractérisé en ce que** le matériau de la matrice est choisi dans le groupe qui contient la résine époxy, les thermoplastiques, la résine phénolique, les polyamides, les bismalamides.

18. Procédé selon l'une quelconque des revendications 10 à 17, **caractérisé en ce qu'**un préimprégné local est agencé à côté du semi-produit à fibres, et le semi-produit à fibres et le préimprégné sont infiltrés simultanément avec la résine.

19. Procédé selon la revendication 18, **caractérisé en ce que** le semi-produit à fibres et/ou la matrice du préimprégné comportent en outre des agents modifiants, des liants et/ou des supports.

20. Procédé selon l'une quelconque des revendications 10 à 19, **caractérisé en ce que** les semi-produits à fibres sont fixés au moyen de colles thermiques, de liants, de granulats et/ou de poudre de résine.
